# EUROPEAN PATENT APPLICATION

(11) **EP 3 388 943 A1**
(43) Date of publication of application: **17.10.2018**
(21) Application number: 17166639.9
(22) Date of filing: 13.04.2017
(51) Int. Cl.: G06F 9/54

(54) **METHOD AND APPARATUS FOR MANAGING EVENTS IN A NETWORK THAT ADOPTS EVENT-DRIVEN PROGRAMMING FRAMEWORK**

(71) Applicant: Nokia Solutions and Networks Oy, 02610 Espoo (FI)
(72) Inventor: Rimac, Ivica, 70435 Stuttgart (DE); Akkus, Istemi, 70435 Stuttgart (DE); Chen, Ruichuan, 70435 Stuttgart (DE)
(74) Representative: Louis Pöhlau Lohrentz

(57) **Abstract**

The present invention discloses a method of managing events in a network that adopts event-driven programming framework, the network comprising: a plurality of physically distributed hosts, each of which has a data storage and a processor coupled to the data storage and configured to process at least one event in the network, a first group of hosts subscribing to a first queue comprising a plurality of events to be processed by at least one host belonging to the first group of hosts, the data storage of the first group of hosts building up a first data storage, the method comprising steps of: a) selecting at least one host satisfying a first condition from the first group of hosts, the first condition indicating that a first event in the first queue can be processed on the host, b) physically storing the first event on the data storage of the host selected in step a) as a part of the first queue; c) processing the first event on a first host physically storing the first event.

## Description

### Field of the invention

The invention relates to network technology, in particular to a method and apparatus for managing events in a network that adopts event-driven programming framework.

### Background

In a network adopting the serverless computing model, resources are utilized based on demand from the applications. The developers are charged by the amount of computing resources they use (i.e., CPU and memory) during the amount of time their code is running, usually at a second granularity. Adopting the serverless computing model can reduce the costs for developers and enable cloud providers to increase their utilization of resources.

To take advantage of this model, developers usually have to write their applications following an event-driven programming model, where functions of the application are triggered by events happening in the system, such as the upload of an image to server storage or a specific HTTP action by the end user. While this programming model makes developing applications easier by following a "simple-condition corresponding to a simple-action" paradigm.

Some examples of event-driven programming frameworks in the cloud are Amazon Lambda, Google Cloud Functions, Azure Functions and IBM Openwhisk. These systems provide developers with various triggers, including events associated with file storage, HTTP requests, timers and database updates. These systems are designed and promoted for simple scenarios, in which a single trigger can cause one or more short-living functions start executing.

These systems may consider data locality, so that the functions are instantiated at hosts that are close to the hosts storing the data. It is also possible in these systems to create chains of functions, in which one function invocation creates an event triggering another function and so on.

### Summary of the Invention

According to the state of the art, the storage of an event is independent from the function code available on a host. Therefore, the host that shall process the event needs to retrieve the event from the data storage of another host. Latency may be caused during the retrieval of the event. An object of the present invention is to reduce the above mentioned latency.

The object of the invention is achieved by the methods and apparatus in the claims.

According to one aspect of the invention, there is provided a method of managing events in a network that adopts event-driven programming framework, the network comprising: a plurality of physically distributed hosts, each of which has a data storage and a processor coupled to the data storage and configured to process at least one event in the network, a first group of hosts subscribing to a first queue comprising a plurality of events to be processed by a host belonging to the first group of hosts, the data storage of the first group of hosts building up a first data storage, the method comprising steps of: a) selecting at least one host satisfying a first condition from the first group of hosts, the first condition indicating that a first event in the first queue can be processed on the host, b) physically storing the first event on the data storage of the host selected in step a) as a part of the first queue; c) processing the first event on a first host physically storing the first event.

Following the idea of the present invention, the event will be physically stored on the host that will process the event. Latency caused by retrieving the event to the host that will process the event can be minimized.

In a preferred embodiment, the step c) further comprises: c1) generating a second event; the method further comprising steps of: d) determining whether the first host satisfies a second condition, the second condition indicating that the second event can be processed on the host, if the first host satisfies the second condition, the method further comprising steps of: d1) physically storing the second event on the data storage of the first host as part of the first queue, and d2) processing the second event on the first host.

In a preferred embodiment, if the first host does not satisfy the second condition in step d), the method further comprises steps a')-c'): a') selecting at least one host satisfying the second condition from the first group of hosts; b') physically storing the second event on the data storage of the host selected in step a') as a part of the first queue; c') processing the second event on a second host physically storing the second event.

According to the state of the art, the types of applications that can be developed are limited: applications requiring sequential invocations of several functions can experience increased delays. These delays can be imposed due to the functions triggering each other and sharing/passing application data through a global event queue. An object of the present invention is to enable the developers to reduce the latency between sequential function invocations.

The present invention provides a shortcut for events that trigger subsequent event to be processed, such that the delay in processing the subsequent event is reduced. As a result, web applications with low-latency requirements can take advantage of the serverless model (i.e., easier orchestration, management, and more cost savings) without paying latency penalties.

In a preferred embodiment, the first host satisfies the second condition in step d), the method further comprises steps a')-b'): a') selecting at least one another host satisfying the second condition from the first group of hosts; b') physically storing a replica copy of the second event on the data storage of the host selected in step a') as a part of the first queue.

In a preferred embodiment, the replica copy of the second event is labeled with a status indicator indicating to which extent the first host has processed the second event.

In a preferred embodiment, the first condition further includes that a first function that is executed to process the first event is locally stored on the host, and the second condition further includes that a second function that is executed to process the second event is locally stored on the host.

By providing a backup copy of the second event in other hosts, the reliability of processing the event is ensured. In case of failure of the first host, the second event will not be lost and can be processed by another host.

In a preferred embodiment, the step c) further comprises: c2) generating a first output data; the step d1) further comprising: physically storing the first output data on the data storage of the first host as part of the first data storage.

In a preferred embodiment, the step d2) further comprising: retrieving the first output data and using the first output data to process the second event on the first host.

In a preferred embodiment, the step c) further comprises: c2) generating a first output data; the step b') further comprising: physically storing the first output on the data storage of the host selected in step a') as a part of the first data storage; the step c') further comprising: retrieving the first output data and using the first output data to process the second event on the second host.

In a preferred embodiment, the step c) further comprising: c2) generating a first output data; and the step b') further comprising: physically storing a replica copy of the first output on the data storage of the host selected in step a') as a part of the first data storage.

Similarly, there is provided a backup copy of the first output data. In case of failure of the first host, the first output data will not be lost and may still be used by another host as input data to process the second event.

According to another aspect of the present invention, there is provided an entity for maintaining a first queue in a network that adopts event-driven programming framework, the network comprising a plurality of physically distributed hosts, each of which has a data storage and a processor coupled to the data storage and configured to process at least one event in the network, a first group of hosts subscribing to the first queue comprising a plurality of events to be processed by at least one host belonging to the first group of hosts, the data storage of the first group of hosts building up a first data storage, the entity being configured to: a) select at least one host satisfying a first condition from the first group of hosts, the first condition indicating that a first event in the first queue can be processed on the host, b) physically store the first event on the data storage of the host selected in step a) as a part of the first queue; c) instruct a first host physically storing the first event to process the first event.

In a preferred embodiment, the first event is generated by a host belonging to the first group or received from an external end.

In a preferred embodiment, the entity is configured to: instruct another host physically storing the first event to process the first event, if the first host fails before it has successfully process the first event.

According to another aspect of the present invention, there is provided a host in a network that adopts event-driven programming framework, the host having a data storage and a processor coupled to the data storage, being configured to subscribe to a first queue comprising a plurality of events to be processed by at least one host belonging to a first group of hosts, wherein, the host is further configured to: process a first event in the first queue; generate a second event; determine whether the host satisfies a second condition, the second condition indicating that the second event can be processed on the host, if the host satisfies the second condition, the host being further configured to: physically store the second event on the data storage of the host as part of the first queue, and process the second event on the host; if the host does not satisfy the second condition, the host being further configured to: report the second event to an entity maintaining the first queue.

In a preferred embodiment, if the host satisfies the second condition, the host is further configured to: report the second event to the entity maintaining the first queue.

### Brief description of the figures

The features and advantages of the invention will be more completely understood by appreciating the following detailed description of preferred embodiments with reference to the figures, wherein
- Fig. 1: depicts a schematic topology diagram of the network 100 according to an embodiment of the present invention;
- Fig. 2: depicts a flow chart of a method according to an embodiment of the present invention;
- Fig. 3: depicts a schematic work flow according to an embodiment of the present invention.

### Detailed description

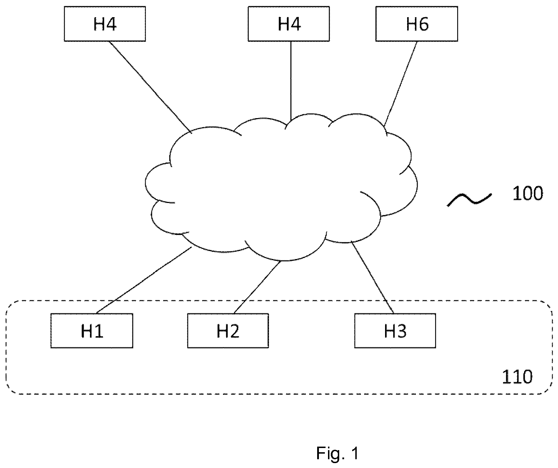

Fig. 1 depicts a schematic topology diagram of the network 100 according to an embodiment of the present invention.

The network 100 comprises a plurality of physically distributed hosts H1-H6. The hosts H1-H6 may communicate with each other according any know technique or any technique developed in the future. For simplicity, only six hosts are shown in Fig.1. The skilled person shall understand that the number of hosts comprised in the network 100 is not limited to the given example. The network 100 may comprises any number of hosts. Each of the hosts H1-H6 has a data storage and a processor coupled to the data storage and configured to process at least one event in the network.

In a preferred embodiment, a host may execute the function code that is originally stored on its data storage to process an event in the network. In another embodiment, a host may extract the function code from the data storage of another host, and then execute the extracted function code to process an event in the network. A host may be configured to process more than one event in the network.

Among the plurality of hosts H1-H6 comprised in the network 100, there is a first group of hosts 110 comprising H1, H2 and H3. In the embodiment shown in Fig. 1, the first group of hosts 110 comprises only part of the hosts comprised in the network 100. In another embodiment, the first group of hosts 110 may comprise all the hosts comprised in the network 100.

The first group of hosts 110 subscribes to a first queue comprising a plurality of events to be processed by at least one host belonging to the first group of hosts 110. The data storage of the first group of hosts 110 builds up a first data storage. The first queue is physically stored on the first data storage. In the mean time, the first queue is logically centralized for the first group of hosts 110, and can be accessed by any host subscribing to the first queue.

In an embodiment, the hosts belonging to the first group 110 subscribe to the first queue according to the functions they have locally available. The first queue is segmented into shards/partitions. Each subscribing host gets logically assigned one or more partitions for each function in a mutually exclusive way (i.e., no two hosts get the same partitions for a function).

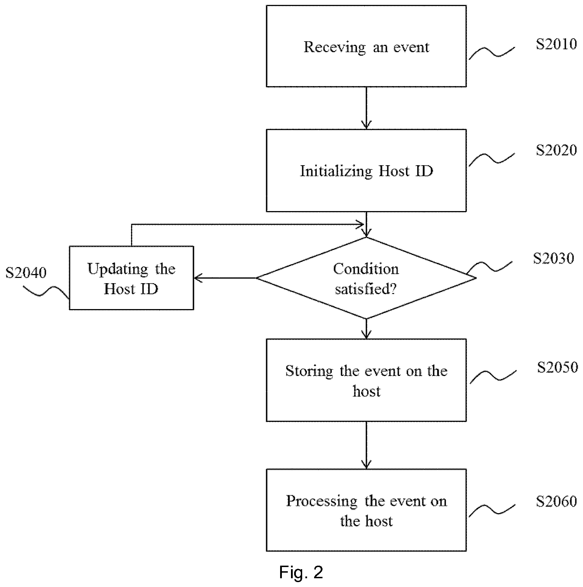

Fig. 2 shows a flow chart of a method according to an embodiment of the present invention. The skilled person shall understand that the steps described in the following with respect to Fig. 2 may be embodied in an entity maintaining the first queue.

In step S2010, a first event may be generated by a host belonging to the first group 101 or received from an external end. In step S2020, the host identification is initialized. In step S2030, it is determined whether the host with the current identification satisfies a first condition. The first condition indicates that the first event can be processed on the host. If the first event can not be processed on the host, the host identification is updated in step S2040 and then the method goes back to step S2030. The procedure is repeated until a host that can process the first event is found.

After a host that can process the first event is found, the method proceeds with step S2050. In step S2050, the first event is physically stored on the data storage of the found host that can process the first event. In step S2060, the first event is processed on the found host.

In this way, while processing an event, the host does not have to retrieve the event from data storage of other host. The latency caused by retrieving the event to the host that shall process the event could be reduced. The access latencies from the host to its logically-assigned queue partitions are minimized. If the function execution runtime and the event subsystem are hosted on the same hosts, then the physical assignment of the partitions mirrors their logical assignment. As a result, when an event is enqueued for a particular host, the event is locally available to be read by the targeted host.

In another embodiment, even if one host that can process the first event has been found in step S2030, the method may still proceed with step S2040, so as to find at least another host that can process the first event. In that case, the first event may be stored on more than one host in step S2050. Additional step may be performed to select a first host from the hosts storing the first event. Then in step S2060, the first event is processed only on the first host.

In this way, a backup for the failover of the first host may be provided. Even if the fist host becomes a defunct host, the events stored on its data storage will not be lost. The entity maintaining the first queue may instruct a second host physically storing the first event to resume the processing of the first event. According to the present invention, the second host also can process the first event, so it does not have to retrieve the first event from data storage of another host. The recovery from failover can be accelerated.

According to a preferred embodiment of the present invention, while processing the first event on the first host in step S2060, a second event may be generated on the first host. In that case, the first host may determine whether the first host satisfies a second condition, the second condition indicating that the second event can be processed on the host. If the second event can be processed locally on the first host, the first host may physically store the second event on the data storage of the first host as part of the first queue, and then process the second event on the first host.

In case of a sequence of functions executed on the same host, this invention will enable the triggering events to be published and immediately consumable on a queue partition local to that particular host. Consequently, local function invocation will be immediate and applications will experience much shorter latencies.

If the first host does not satisfy the second condition, the first host reports the second event to the entity maintaining the first queue. The entity maintaining the first queue may store the second event according to the method described above referring to Fig.2. Steps S2010-S2060 may be performed for the second event similar as they are performed for the first event.

At least one host satisfying the second condition may be selected from the first group of hosts. The second event is physically stored on the data storage of the selected host that can process the second event as a part of the first queue. Additional step may be performed to select a second host from the hosts storing the second event. Then the second event is processed only on the second host physically storing the second event.

In a preferred embodiment, if the first host satisfies the second condition, it is advantageous to select at least one another host satisfying the second condition from the first group of hosts, and physically store the second event on the data storage of the selected at least one another host as a part of the first queue. In this way, a backup for the failover of the first host may be provided.

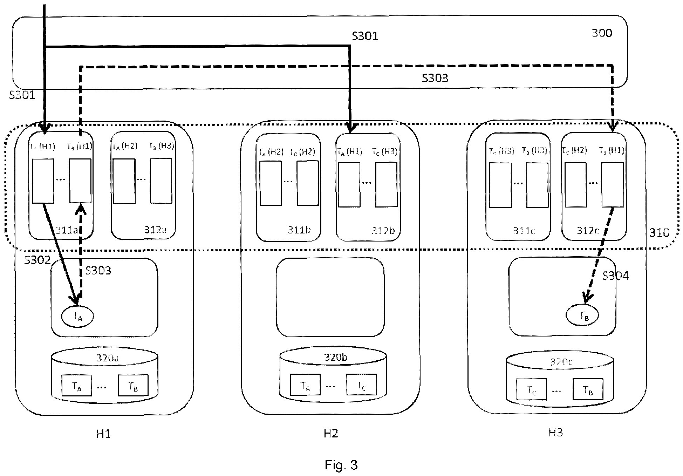

Fig. 3 depicts a schematic work flow according to an embodiment of the present invention.

In Fig.3, there are three hosts H1, H2 and H3 in the first group 110. Each of the host stores a part of the first queue 310 and function code 320a, 320b, and 320c for a plurality of functions in the data storage.

Specifically, the host H1 stores the function code that may be executed to process the event T_{A} and the function code that may be executed to process the event T_{B} on part of its data storage 320a. The host H2 stores the function code that may be executed to process the event T_{A} and the function code that may be executed to process the event T_{C} on part of its data storage 320b. The host H3 stores the function code that may be executed to process the event T_{C} and the function code that may be executed to process the event T_{B} on part of its data storage 320c. Other function code may also be stored on the host H1, H2 and H3.

In step S301, an event T_{A} is received from external side, following the procedure described with respect to Fig. 2, the event T_{A} may be stored on the hosts H1 and H2, since the function code that may be executed to process the event T_{A} is stored on the hosts H1 and H2.

The events comprised in the first queue are stored on the hosts subscribing to the first queue in a mutually exclusive way (i.e., no two hosts get the same partitions for a function) in part of its data storage 311a, 311b and 311c. In a preferred embodiment, each event may be stored on at least two hosts to provide a backup for the failover of one of the host. The replica copy of an event is stored on the hosts in another part of its data storage 312a, 312b and 312c. In the embodiment shown in Fig.3, the event T_{A} is stored on H1 in part of its data storage 311 a, and stored on the H2 as a replica in part of its data storage 312b.

Only one of the hosts physically storing the event T_{A} is going to process the event TA. In the embodiment shown in Fig. 3, the host H1 processes the event T_{A} in step S302. If the host H1 fails before it has successfully process the event T_{A}, the host H2 will take over the processing of the event T_{A} during a recovery procedure.

In the embodiment shown in Fig. 3, a subsequent event T_{B} is generated on the host H1 by processing the event T_{A}. The host H1 determines whether it has the function code that may be executed to process the event T_{B} locally available. In the embodiment shown in Fig. 3, the event T_{B} can be locally processed by the host H1. Therefore, in step S303, the host H1 stores the event T_{B} in part of its data storage 311 a. In this way, the subsequently generated event T_{B} can be directly processed on the host H1. Latency caused by the transmission of the event may be reduced.

In another embodiment, the host H1 can not process the event T_{B} locally, then the host H1 will report the event T_{B} to the entity maintaining the first queue. Steps similar as S2010-S2060 may be performed to select at least one host to store the event T_{B} as part of the first queue 310.

Following the idea of the present invention, even if the host H1 can process the event T_{B} locally, the host H1 may still report the event T_{B} to the entity maintaining the first queue 310, so as to save a replica copy of the event T_{B} in another host that can process the event T_{B} if the host H1 fails. In the embodiment shown in Fig.3, the event T_{B} is also stored on host H3 as replica copy in part of its data storage 312c, since the function code that may be executed to process the event T_{B} is also locally available on H3.

If the host H1 fails before it has successfully process the event T_{B}, during a recovery procedure, the host H3 may retrieve the event T_{B} from the first queue 310 and process the event T_{B} on H3 in step S304. Since the replica of the event is physically stored on the host that takes over the processing of the event during recovery, the latency experienced during the recovery procedure can be reduced.

In a preferred embodiment, the replica copy of the subsequently generated event T_{B} is labeled with a status indicator. The status indicator indicates to which extent the host H1 has processed the event T_{B}. If the status indicator of the event T_{B} indicates that the host H1 is still processing the event T_{B} or the host H1 has successfully processed the event T_{B}, the entity maintaining the first queue 310 will not instruct the other host H3 to process the event T_{B}. If the status indicator of the event T_{B} indicates that the host H1 cannot successfully process the event T_{B}, the entity maintaining the first queue will instruct the other host H3 to resume the processing of the event T_{B}.

In a preferred embodiment, the status indicator indicates at least one of: 1) whether the host H1 has started with processing the event T_{B}, 2) whether the writing of a output data has started, 3) whether the host H1 has finished with processing the event T_{B}.

In one embodiment of the present invention, a first output data may be generated on the first host after the first event has been processed on the first host. In some embodiments, the first output data may be retrieved and used as input data or basis to process the second event. Therefore, it is advantageous to store the first output data physically on a host that will process the second event as a part of the first data storage. In one embodiment, the first output data is stored on the same host as the second event, the processing of which may require the first output data.

For example, if the second event can be processed locally on the first host, the first data is stored on the data storage of the first host as a part of the first data storage. If the second event cannot be processed by the first host, steps similar to those described with respect to Fig. 2 may be performed to select at least one host that can process the second event, the first data and the second event may be stored together on the data storage of the selected host(s).

Following the idea of the present invention, the latency for retrieving the first output data is minimized.

## Claims

1. A method of managing events in a network that adopts event-driven programming framework,
the network comprising a plurality of physically distributed hosts, each of which has a data storage and a processor coupled to the data storage and configured to process at least one event in the network,
a first group of hosts subscribing to a first queue comprising a plurality of events to be processed by at least one host belonging to the first group of hosts,
the data storage of the first group of hosts building up a first data storage,
the method comprising steps of:
a) selecting at least one host satisfying a first condition from the first group of hosts, the first condition indicating that a first event in the first queue can be processed on the host,
b) physically storing the first event on the data storage of the host selected in step a) as a part of the first queue;
c) processing the first event on a first host physically storing the first event.

2. A method according to claim 1, wherein, the step c) further comprises:
c1) generating a second event;
the method further comprising steps of:
d) determining whether the first host satisfies a second condition, the second condition indicating that the second event can be processed on the host, if the first host satisfies the second condition, the method further comprising steps of:
d1) physically storing the second event on the data storage of the first host as part of the first queue, and
d2) processing the second event on the first host.

3. A method according to claim 2, wherein, if the first host does not satisfy the second condition in step d), the method further comprises steps a')-c'):
a') selecting at least one host satisfying the second condition from the first group of hosts;
b') physically storing the second event on the data storage of the host selected in step a') as a part of the first queue;
c') processing the second event on a second host physically storing the second event.

4. A method according to claim 2, wherein, if the first host satisfies the second condition in step d), the method further comprises steps a')-b'):
a') selecting at least one another host satisfying the second condition from the first group of hosts;
b') physically storing a replica copy of the second event on the data storage of the host selected in step a') as a part of the first queue.

5. A method according to claim 4, wherein, the replica copy of the second event is labeled with a status indicator indicating to which extent the first host has processed the second event.

6. A method according to claim 1, wherein, the first condition further includes that a first function that is executed to process the first event is locally stored on the host, and the second condition further includes that a second function that is executed to process the second event is locally stored on the host.

7. A method according to claim 2, wherein, the step c) further comprises:
c2) generating a first output data;
the step d1) further comprising:
physically storing the first output data on the data storage of the first host as part of the first data storage.

8. A method according to claim 7, the step d2) further comprising:
retrieving the first output data and using the first output data to process the second event on the first host.

9. A method according to claim 3, wherein, the step c) further comprises:
c2) generating a first output data;
the step b') further comprising:
physically storing the first output on the data storage of the host selected in step a') as a part of the first data storage;
the step c') further comprising:
retrieving the first output data and using the first output data to process the second event on the second host.

10. A method according to claim 4, the step c) further comprising:
c2) generating a first output data;
and the step b') further comprising:
physically storing a replica copy of the first output on the data storage of the host selected in step a') as a part of the first data storage.

11. An entity for maintaining a first queue in a network that adopts event-driven programming framework,
the network comprising a plurality of physically distributed hosts, each of which has a data storage and a processor coupled to the data storage and configured to process at least one event in the network,
a first group of hosts subscribing to the first queue comprising a plurality of events to be processed by at least one host belonging to the first group of hosts,
the data storage of the first group of hosts building up a first data storage,
the entity being configured to:
a) select at least one host satisfying a first condition from the first group of hosts, the first condition indicating that a first event in the first queue can be processed on the host,
b) physically store the first event on the data storage of the host selected in step a) as a part of the first queue;
c) instruct a first host physically storing the first event to process the first event.

12. An entity according to claim 11, wherein, the first event is generated by a host belonging to the first group or received from an external end.

13. An entity according to claim 11, wherein, the entity is configured to:
- instruct another host physically storing the first event to process the first event, if the first host fails before it has successfully process the first event.

14. A host in a network that adopts event-driven programming framework,
the host having a data storage and a processor coupled to the data storage, being configured to subscribe to a first queue comprising a plurality of events to be processed by at least one host belonging to a first group of hosts, wherein, the host is further configured to:
- process a first event in the first queue;
- generate a second event;
- determine whether the host satisfies a second condition, the second condition indicating that the second event can be processed on the host,
if the host satisfies the second condition, the host being further configured to:
- physically store the second event on the data storage of the host as part of the first queue, and
- process the second event on the host;
if the host does not satisfy the second condition, the host being further configured to:
- report the second event to an entity maintaining the first queue.

15. A host according to claim 14, wherein, if the host satisfies the second condition, the host is further configured to:
- report the second event to the entity maintaining the first queue.
